# EUROPEAN PATENT SPECIFICATION

(11) **EP 1 227 673 B1**
(45) Date of publication and mention of the grant of the patent: **08.06.2005**
(21) Application number: 01310908.7
(22) Date of filing: 27.12.2001
(51) Int. Cl.: H04N 5/44, H04N 7/10

(54) **Home entertainment system**
Heimunterhaltungssystem
Système de divertissement domestique

(30) Priority: 19.01.2001 GB 0101436
(43) Date of publication of application: 31.07.2002
(73) Proprietor: ITT MANUFACTURING ENTERPRISES, INC., Wilmington, Delaware 19801 (US)
(72) Inventor: Applewhite, Paul, Basingstoke, Hants RG25 2JQ (GB); McLaren, John c/o ITT Ind. Network Systems & Serv., Basingstoke, Hants RG22 4BA (GB)
(74) Representative: Exell, Jonathan Mark

(56) References cited:
- EP-A- 0 408 236
- GB-A- 2 296 169
- US-A- 5 555 466
- US-B1- 6 169 879
- PATENT ABSTRACTS OF JAPAN vol. 1997, no. 12, 25 December 1997 (1997-12-25) & JP 09 224235 A (NIPPON SOFT PURANNAA:KK), 26 August 1997 (1997-08-26)

## Description

This invention relates to home entertainment systems, in which a number of consumer electronics devices are interconnected by a system, in order to simplify the connection of the devices and to provide additional functionality. For example, the devices may include combinations of television sets, a VCR, a stereo system, a DVD player, a satellite receiver, a cable set-top box, a video game player, an Internet terminal device and security cameras.

The television used to be a simple device for users to set up and connect. However, the numerous other consumer electronics devices that may now be connected to a television complicate the connections and may also degrade the signal quality within a system. In particular, the UHF or VHF television signal is conventionally carried by a coaxial cable, which has the required bandwidth for carrying the modulated TV signal. This signal is demodulated in a TV receiver, and thereby translated to baseband frequencies.

In the past, a VCR used to be connected to a television using coaxial connectors carrying UHF or VHF signals. The VCR would demodulate the signal to enable the signal to be recorded, and the recorded signal when eventually being played would have to be remodulated to UHF frequencies before transfer to the TV set over a coaxial cable. These multiple conversions are a source of noise. The more recent use of SCART connectors enables baseband signals to be transmitted between TVs and VCRs, reducing this problem. However, coaxial cables carrying UHF signals are still used for providing multiple TV aerial sockets in different rooms in a home. This requires wideband amplification of the frequencies of interest before distribution around the home.

The physical connection of multiple devices in order to realize the full benefit of each component of a home entertainment system can also be difficult, with a variety of types of connectors for different devices.

GB 2296169 discloses a video transmission system comprising a transmission station and a plurality of receiving stations. A selected video signal is transmitted from the transmitting station to a receiving station in accordance with a channel selection signal inputted by a user at the receiving station.

According to a first aspect of the invention, there is provided a home entertainment system backbone, comprising: a hub having a switching matrix and a plurality of TV tuners connected to the switching matrix; a plurality of ports connected to the switching matrix for consumer devices and television sets, a number of the ports being allocated a respective TV tuner; and a plurality of remote control sensors, each associated with a respective port, for providing remote control signals to the respective ports; characterised in that the switching matrix enables: remote control signals provided to one of said number of the ports to be at the same time routed to the allocated TV tuner and to other ports; and selected ports to be coupled together for transfer of audio and/or video data.

The architecture of the invention enables the hub to be provided with the UHF or VHF TV signal, typically over a coaxial cable from an aerial. All of the TV tuners used by the entertainment system are in the hub, so that the distribution of signals around the system can take place at baseband frequencies. The switching matrix enables consumer devices, such as video recorders or cable or satellite decoders, to be positioned in one location, but enables the signals to be connected to any chosen location in the home. The remote control sensors enable the tuners to be controlled by a remote control, despite their location in the system hub. Preferably, each TV tuner includes a stereo sound decoder.

Preferably, twisted pair cabling is provided between each port and the hub. This is possible because all signals from the hub are at baseband frequencies. The cabling may comprise four twisted pairs, with one twisted pair allocated to remote control signalling, one twisted pair allocated to one channel of audio, one twisted pair is allocated to another channel of audio and one twisted pair allocated to video data.

The cabling may comprise balanced twisted pair cabling, such as CAT5 cabling, and each port may comprise an RJ45 port.

The ports will be distributed around the home (with some ports also in the hub), possibly with a small number of ports in each room. All ports can be the same, regardless of the type of device to be connected to the system at the location of that port. One or more ports may be for security cameras, and the switching matrix then enables camera images to be selectively coupled to the TVs in the system.

The hub may then comprise means for detecting an alarm signal on the camera signal inputs, and wherein the switching matrix is controllable in response to the alarm signals to interrupt selected TV tuner signals with camera signals.

The hub may have an array of connectors, each connector in the array being connectable to a respective TV tuner by a linking element, and the array of connectors being connected to the switching matrix such that the TV tuners can be associated with selected ports using the linking elements. This enables the system to have more ports than TV tuners, with the ability to choose which ports to use as TV locations.

The hub may have a further switching arrangement for selectively coupling a first port at which audio is received from a consumer device to multiple other audio ports as audio output signals. In this way, a hi-fi output can be provided to one port (at the location of the hi-fi device) and the switching arrangement can route the audio signals to other ports to which speakers are connected. The switching arrangement may be a manual device located at the hub, or else at another suitable location, and which enables the distribution of audio to be controlled.

The audio ports may simply comprise a subset of the ports of the system, so that the audio ports and the TV ports are the same, with the same cabling.

The invention also provides a home entertainment system comprising a home entertainment system backbone of the invention and a plurality of televisions, each connected to one of the allocated ports, and a plurality of consumer devices each connected to the hub.

One of the consumer devices may comprise a camera, which preferably has a motion detector and wherein the switching arrangement of the hub is controllable in response to the motion detector to provide CCTV images to a selected television or televisions. The consumer devices may also comprises one or more of a video recorder, a satellite decoder, a cable TV decoder, a DVD player and a games console.

According to a second aspect of the invention, there is provided a home entertainment system hub, comprising: a plurality of TV tuners each receiving a UHF or VHF TV signal and demodulating the signal to baseband; and a switching matrix having baseband inputs for consumer devices and for the TV tuner signals and baseband outputs for sockets of the system, wherein the switching matrix enables the inputs to be selectively coupled to the outputs; characterised in that the home entertainment system hub further comprises: a processor for receiving control signals from the sockets, where control signals from a socket are at the same time routed to a plurality of inputs, to enable control of the consumer devices and TV tuners, and to control the switching matrix to enable selected consumer device data signals to be coupled to sockets from which the control signals are received.

The invention will now be described in detail with reference to the accompanying drawings, in which:
Figure 1 shows a home entertainment system of the invention;
Figure 2 shows how a TV is connected to the system;
Figure 3 shows an additional audio distribution system for use with the home entertainment system;
Figure 4 shows how speakers are connected to the system; and
Figure 5 shows how consumer devices within the system can be located at any desired location.

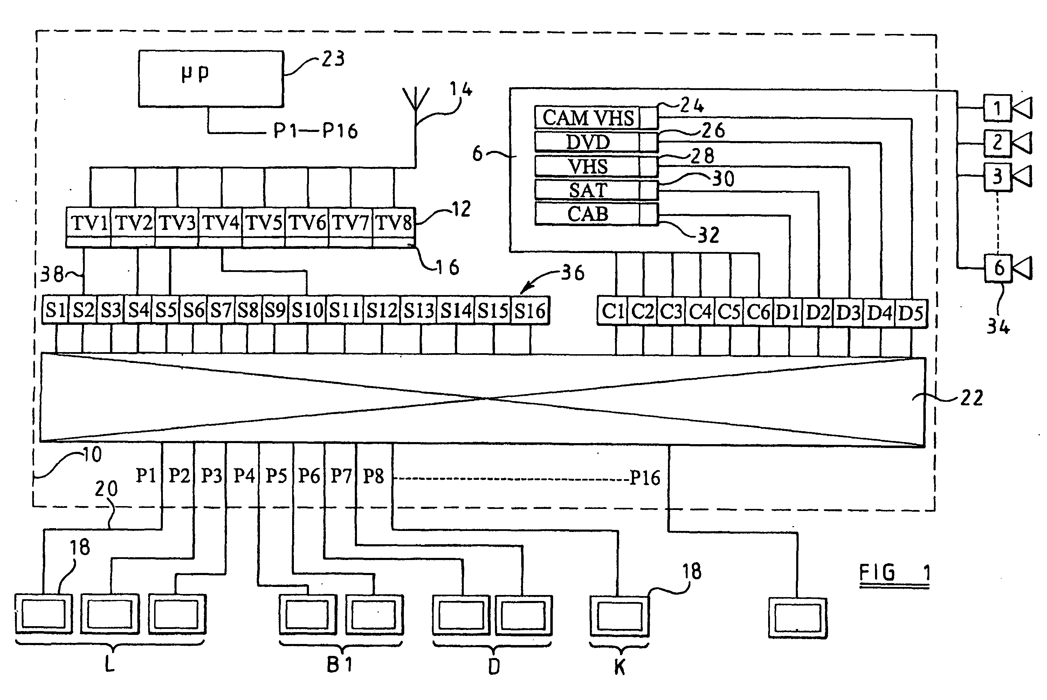

Figure 1 shows a home entertainment system of the invention. The system comprises a backbone, which is the essential wiring and connection terminals of the system, and consumer devices connected to the terminals. The system has a central controlling hub 10 which comprises a plurality of TV tuners 12. In Figure 1, eight such tuners TV1 to TV8 are shown. The system can thus support eight independently controllable televisions.

The hub receives the TV UHF/VHF signal over antenna 14, and each tuner TV1 to TV8 demodulates the TV signal and translates it to baseband frequencies. Each tuner also has a stereo sound decoder, and provides a video output and audio left and audio right signals. Each tuner is also provided with a remote control signal reader 16, which enables remote control signals to be provided to the tuners for controlling the tuning.

Remote from the hub 10, a plurality of sockets 18 are provided distributed around the home, and to which the user equipment is connected. In Figure 1, the hub is shown as having sixteen port outputs P1 to P16, each connected to one of the sockets 18. Only eight sockets 18 are shown in Figure 1 for simplicity. In the example shown, three sockets are in the lounge L, two are in the master bedroom B1, two are in the dining room D and one is in the kitchen K.

Each socket 18 is connected to the hub 10 by cabling 20. Balanced twisted pair cabling is used, for carrying baseband (not UHF/VHF) signals. The cabling may comprise four twisted pairs, with one twisted pair allocated to remote control signalling, one twisted pair allocated to one channel of audio, one twisted pair is allocated to another channel of audio and one twisted pair allocated to video data. For example, the cabling may comprise CATS cabling, and each socket may comprise an RJ45 socket.

The sixteen ports P1 to P 16 comprise the output signals of a switching matrix 22. The switching matrix 22 is a baseband switching device which enables any of the inputs to be switched to any of the outputs. The inputs to the switching matrix comprise the baseband TV tuner signals TV1 to TV8 and baseband signals from other consumer devices. Figure 1 shows six camera signal inputs C1 to C6 and five other device inputs D1 to D5. By way of example, a video 24 for recording camera signals, a DVD player 26, a user video recorder 28, a satellite receiver 30 and a cable decoder 32 are shown in Figure 1. Although not shown, the devices may also include audio systems. In the example of Figure 1, these form part of the hub 10, although it will be apparent from the following that these devices may be connected to the sockets around the home if the user desires. Six cameras 34 are shown outside the hub 10.

The inputs TV1 to TV8, C1 to C6 and D1 to D5 and the outputs P1 to P16 may all be considered as ports of the switching matrix, which functions to route selected inputs to the outputs.

It is possible for the eight TV tuner outputs to be provided directly as inputs to the switching matrix. In this case, each TV tuner is allocated to a particular port, and the switching matrix by default connects each TV tuner to the allocated port. In this case there will be the same number of ports as the maximum number of TV tuners. For greater flexibility, in the example of Figure 1, there are more output ports P than TV tuners, and the TV tuner outputs can be allocated to desired input ports. For this purpose, the hub 10 has an array 36 of connectors S1 to S16. Each connector in the array can be connected to a respective TV tuner by a linking element 38. The linking element 38 may be manually positioned to enable the system to be configured according to requirements. This enables a patch panel system to be implemented. Thus, in the example of Figure 1, the user has decided that tuner TV1 should be provided to port P2 in the lounge, and this is achieved by manually inserting a linking element between tuner TV1 and connector S2. This decision will be based, for example, on the positioning of furniture in the home. Similarly, the output of tuner TV2 is provided to port P4 for the main bedroom, and so on.

The default setting of the switching matrix 22 is to couple the inputs S1 to S16 to the ports P1 to P16.

Each socket (which is in use) is provided with an Infrared remote control sensor. As shown in Figure 2, at a socket which is in use, the audio (Left and Right) and the video twisted pair signals from an RJ45 connector are provided to a SCART socket 50, which connects to the TV. This enables baseband signals to be provided to the TV without lossy remodulation and demodulation to and from UHF frequencies. The remote control signals are provided to a remote control sensor 52 for mounting on (for example) the television 54. The signals from the remote control device 56 are provided over the allocated twisted pair to the hub, as input signals to the ports P1 to P16. The twisted pair for the remote control signals carries duplex signals, and also carries the power to the remote control sensor 52.

The hub includes a processor 23 which receives all of the remote control signals provided to the ports P1 to P16. The hub therefore detects all remote control choices made by the user and uses this information to control the switching matrix 22.

For example, if the user at port P2 selects a channel which is reserved for the video 28, the switching matrix will switch input D3 to port P2 (from which the request arrived), effectively overriding the default connection of that port to the respective tuner TV1. Each consumer device is also provided with a remote control signal reader. This may be a standard IR detector. In order to provide IR signals to the detector, the twisted pair cable leading to the consumer device is provided with an LED (light emitting diode) which is fixed adjacent the standard detector of the consumer device. Thus, the IR signals are converted to electrical signals at the socket, and are reconverted to IR signals at the consumer devices.

The system is transparent to the remote control signals, so that the signals received at the switching matrix on the twisted pair allocated to remote control signals are permanently routed to all of the consumer devices. A single remote control for any device can be used in all rooms of the home- the switching matrix simply routes the remote control signal to all devices, and the device being controlled will recognise the signal, whereas other devices will not.

Thus, for example, a video remote control can be used at the socket connected to port P2 to control the video 28 in the hub 10.

Each device 24,26,28,30,32 will have an allocated channel (or other remote control signal input) so that the hub can connect the user to any desired equipment from any socket 18. Essentially, the switching matrix functions to override the normal connection of the TV tuner video and audio to the socket.

As shown in Figure 1, the switching matrix 22 has six security camera inputs C1 to C6, and the switching matrix 22 then enables camera images to be selectively coupled to the TVs in the system. For example user selection of one channel (for example channel 20) may result in the switching matrix coupling all six camera (for example CCTV) signals to the port from which the channel 20 request originated in a cyclical manner. Channels 21 to 26 may then be for selecting a single one of the camera inputs.

The user may also be able to select additional functionality. For example, the user may wish to be interrupted (from the TV/video he is watching) only every minute for one second of camera signal.

The cameras may be provided with motion and/or sound sensors, and when motion or sound is detected, the signals may be coupled to the port as an alarm-type message for a desired length of time. An alarm icon may be provided on the screen so that should the user have missed the information, there is an icon to alert the user to a previous alarm signal. As shown in Figure 1, a camera video 24 may be provided. This may be controlled by the user at one of the sockets, or it may be set to an automatic routine which only records for fixed times after the alarm signals.

The cameras may not need actual RJ45 sockets 18 as they may be installed in one position and remain fixed. However, the camera control and signals are relayed using the same cabling, and could be connected to identical sockets 18 as for the remainder of the system. This may be desired if camera location may want to be changed, for example if a camera can be positioned in a chosen room for baby monitoring. The alarm signals will be relayed over the twisted pair allocated to remote control signals.

Figure 3 shows an extension of the system to provide distributed audio. This may use the same ports P1 to P16, or may use additional ports. In Figure 3, the ports P1 to P16 of the system can be connected to a further switching arrangement 60 for selectively coupling a first port at which audio is received from a consumer device to multiple other audio ports as audio output signals. For example the signal at port P2 is provided as input I to the switching arrangement 60, and the four outputs O1 to 04 from the switching arrangement are connected to ports P3,P14,P15 and P16. In this way, a hi-fi output can be provided to one socket (at the location of the hi-fi device) and the switching arrangement can route the audio signals to other sockets to which speakers are connected. The switching arrangement 60 may be a manual device located at the hub, or else at another suitable location, and which enables the distribution of audio to be controlled. Each port may have an independent volume control for the speaker signals, so that different volumes may be provided in different rooms.

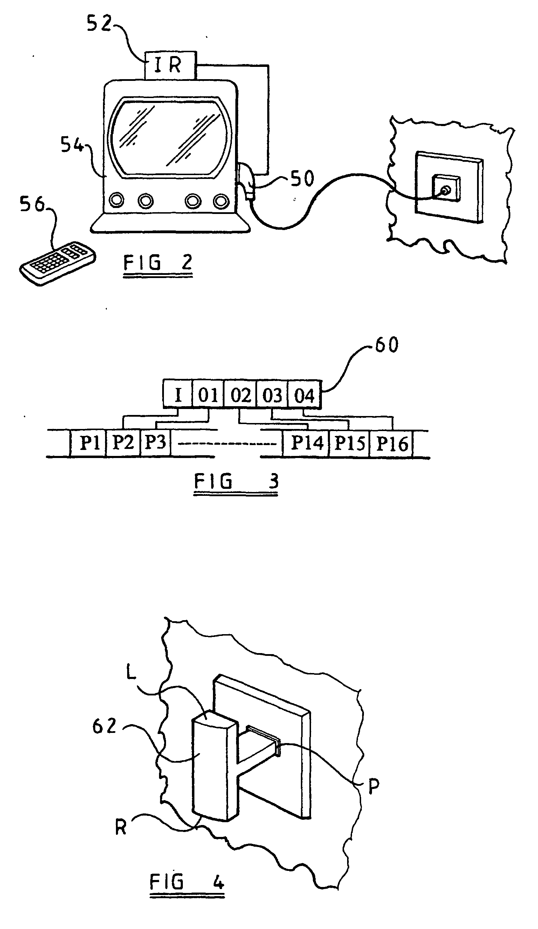

Figure 4 shows a connector 62 for extracting the audio from a socket P, which provides one twisted pair as a left speaker signal L and one twisted pair as a right speaker signal R.

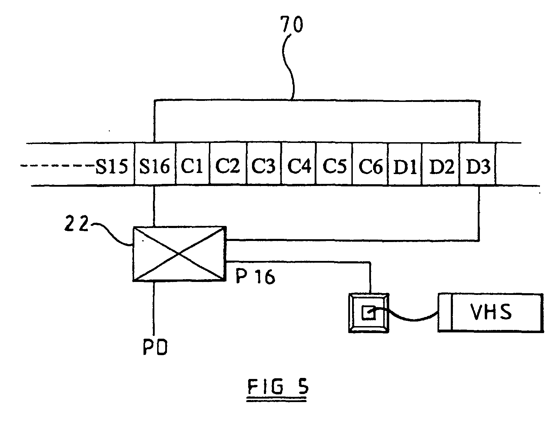

In the example described above, the consumer devices are in the hub 10. However, they may be at any desired location. Figure 5 shows a video recorder 28 in a room of the house associated with port P16. The switching matrix 22 couples the video to connector S16, and a physical connection 70 within the hub connects the video signal to the switching matrix input D3. The signal is switched from D3 to the desired port PD by the switching matrix 22.

Numerous variations to the system will be apparent to those skilled in the art. The number of ports, and the number of devices, TV tuners and cameras supported by the system are all by way of example only. The invention enables multiple devices to be connected together simply using low cost cabling and with a high degree of flexibility. The transparency of the system to IR control signals allows existing remote control devices to be used. Each device in the hub simply requires a device enabling the remote control signals to regenerated (for example an LED) and directed to the IR detectors. Multiple remote controls may be combined to a single programmable remote control device to enable control of a pool of devices. The devices in the hub supply baseband signals to the switching matrix, enabling all cabling to be twisted pair cabling.

The invention can be implemented using well known equipment. Essentially, the invention can be implemented with a baseband switching matrix and a processor which receives inputs derived from remote control device signals. The system can be supplemented with various designs of user interface, with menus for defining the system set up and operation. These will all be apparent to those skilled in the art.

Although the signals from the hub are described as being provided to televisions, monitors may instead be used (i.e. not having a tuner).

## Claims

1. A home entertainment system backbone, comprising:
a hub (10) having a switching matrix (22) and a plurality of TV tuners (12) connected to the switching matrix (22);
a plurality of ports connected to the switching matrix (22) for consumer devices and television sets, a number of the ports being allocated a respective TV tuner (12); and
a plurality of remote control sensors(52), each associated with a respective port, for providing remote control signals to the respective ports;
**characterised in that** the switching matrix (22) enables:
remote control signals provided to one of said number of the ports to be at the same time routed to the allocated TV tuner (12) and to other ports; and
selected ports to be coupled together for transfer of audio and/or video data.

2. A home entertainment system backbone as claimed in claim 1, wherein each TV tuner (12) includes a stereo sound decoder.

3. A home entertainment system backbone as claimed in claim 1 or 2, further comprising twisted pair cabling between each port and the hub (18).

4. A home entertainment system backbone as claimed in claim 3, wherein the cabling comprises four twisted pairs.

5. A home entertainment system backbone as claimed in claim 4, wherein one twisted pair is allocated to remote control signalling, one twisted pair is allocated to one channel of audio, one twisted pair is allocated to another channel of audio and one twisted pair is allocated to video data.

6. A home entertainment system backbone as claimed in claim 4 or 5, wherein the cabling comprises balanced twisted pair cabling.

7. A home entertainment system backbone as claimed in any preceding claim, wherein each port comprises an RJ45 port.

8. A home entertainment system backbone as claimed in any preceding claim, wherein the hub (10) has an array of connectors (36), each connector in the array (36) being connectable to a respective TV tuner(12) by a linking element (38), and the array of connectors (36) being connected to the switching matrix (22) such that the TV tuners (12) can be associated with selected ports using the linking elements (38).

9. A home entertainment system backbone as claimed in any preceding claim, wherein a plurality of ports are provided for camera signal inputs.

10. A home entertainment system backbone as claimed in claim 9, wherein the hub (10) comprises means for detecting an alarm signal on the camera signal inputs, and wherein the switching matrix (22) is controllable in response to the alarm signals to interrupt selected TV tuner signals with camera signals.

11. A home entertainment system backbone as claimed in any preceding claim, wherein the hub (10) has a switching arrangement for selectively coupling a first port at which audio is received from a consumer device to multiple other audio ports as audio output signals.

12. A home entertainment system comprising a home entertainment system backbone as claimed in any preceding claim, and a plurality of televisions, each connected to a respective one of the allocated ports, and a plurality of consumer devices each connected to the hub.

13. A home entertainment system as claimed in claim 12, wherein one of the consumer devices comprises a camera (34).

14. A home entertainment system as claimed in claim 13, wherein the camera (34) has a motion detector and wherein the switching arrangement of the hub (10) is controllable in response to the motion detector to provide camera images to a selected television or televisions.

15. A home entertainment system as claimed in any one of claims 12 to 14, wherein the consumer device comprises one or more of a video recorder (28), a satellite decoder (30), a cable TV decoder (32), a DVD player (26) and a games console.

16. A home entertainment system as claimed in any one of claims 12 to 15, wherein the or each consumer device is provided with a device for receiving a remote control signal.

17. A home entertainment system hub (10), comprising:
a plurality of TV tuners (12) each receiving a UHF or VHF TV signal and demodulating the signal to baseband; and
a switching matrix (22) having baseband inputs for consumer devices and for the TV tuner signals and baseband outputs for sockets of the system, wherein the switching matrix (22) enables the inputs to be selectively coupled to the outputs;
**characterised in that** the home entertainment system hub (10) further comprises:
a processor (23) for receiving control signals from the sockets, where control signals from a socket are at the same time routed to a plurality of inputs, to enable control of the consumer devices and TV tuners (12), and to control the switching matrix to enable selected consumer device data signals to be coupled to sockets from which the control signals are received.

## Patentansprüche

1. Eine Hauptstruktur eines Heimunterhaltungssystems, die Folgendes aufweist:
einen Hub (10) mit einer Schaltmatrix (22) und einer Vielzahl von TV-Tunern (12), die mit der Schaltmatrix (22) verbunden sind;
eine Vielzahl von Anschlüssen, die für Verbrauchergeräte und Fernsehgeräte mit der Schaltmatrix (22) verbunden sind, wobei einer gewissen Anzahl der Anschlüsse ein entsprechender TV-Tuner (12) zugewiesen wurde; und
eine Vielzahl von Fernbedienungssensoren (52), die jeder einem entsprechenden Anschluss zur Übertragung von Fernbedienungssignalen an die entsprechenden Anschlüsse zugeordnet sind; **dadurch gekennzeichnet,**
**dass** die Schaltmatrix (22) folgendes ermöglicht:
die gleichzeitige Weiterleitung der Fernbedienungssignale, die an einen der genannten Anzahl von Anschlüssen übertragen wurden, an den zugewiesenen TV-Tuner (12) und an andere Anschlüsse; und
die Zusammenkopplung von ausgewählten Anschlüssen zur Übertragung von Audio- und/oder Videodaten.

2. Eine Hauptstruktur eines Heimunterhaltungssystems nach Anspruch 1, wobei jeder TV-Tuner (12) einen Stereo-Klangdekoder aufweist.

3. Eine Hauptstruktur eines Heimunterhaltungssystems nach Anspruch 1 oder 2, die weiterhin eine Twisted-Pair-Verkabelung zwischen jedem Anschluss und dem Hub (18) aufweist.

4. Eine Hauptstruktur eines Heimunterhaltungssystems nach Anspruch 3, wobei die Verkabelung ein vierfach Twisted-Pair-Kabel aufweist.

5. Eine Hauptstruktur eines Heimunterhaltungssystems nach Anspruch 4, wobei ein Twisted-Pair für die Übertragung von Fernbedienungssignalen, ein Twisted-Pair für einen Audiokanal, ein Twisted-Pair für einen anderen Audiokanal und ein Twisted-Pair für Videodaten bestimmt ist.

6. Eine Hauptstruktur eines Heimunterhaltungssystems nach Anspruch 4 oder 5, wobei die Verkabelung eine Balanced-Twisted-Pair-Verkabelung ist.

7. Eine Hauptstruktur eines Heimunterhaltungssystems nach einem der vorgenannten Ansprüche, wobei jeder Anschluss einen RJ45-Anschluss aufweist.

8. Eine Hauptstruktur eines Heimunterhaltungssystems nach einem der vorgenannten Ansprüche, wobei der Hub (10) eine Reihe von Anschlüssen (36) aufweist, jeder Anschluss in der Reihe (36) durch ein Verbindungselement (38) mit einem entsprechenden TV-Tuner (12) verbunden werden kann und die Reihe von Anschlüssen (36) mit der Schaltmatrix (22) verbunden ist, so dass die TV-Tunern (12) mit Hilfe der Verbindungselemente (38) ausgewählten Anschlüssen zugewiesen werden können.

9. Eine Hauptstruktur eines Heimunterhaltungssystems nach einem der vorgenannten Ansprüche, wobei eine Anzahl von Anschlüssen für Kamerasignaleingänge zur Verfügung steht.

10. Eine Hauptstruktur eines Heimunterhaltungssytems nach Anspruch 9, wobei der Hub (10) Vorrichtungen zur Detektierung eines Alarmsignals der Kamerasignaleingänge aufweist und wobei die Schaltmatrix (22) als Reaktion auf die Alarmsignale in Bezug auf eine Unterbrechung ausgewählter Kanalwählersignale mit Kamerasignalen gesteuert werden kann.

11. Eine Hauptstruktur eines Heimunterhaltungssystems nach einem der vorgenannten Ansprüche, wobei der Hub (10) einen Schaltmechanismus für die wahlweise Kopplung eines ersten Anschlusses, an dem Audiosignale eines Verbrauchergerätes empfangen werden, mit mehreren anderen Audioanschlüssen als Audioausgangssignale aufweist.

12. Ein Heimunterhaltungssystem, das eine Hauptstruktur eines Heimunterhaltungssystems nach einem der vorgenannten Ansprüche aufweist sowie eine Vielzahl von Fernsehgeräten, von denen jedes an einen entsprechenden der zugewiesenen Anschlüsse angeschlossen ist, und eine Vielzahl von Verbrauchergeräten, von denen jedes an den Hub angeschlossen ist.

13. Ein Heimunterhaltungssystem nach Anspruch 12, wobei eines der Verbrauchergeräte eine Kamera (34) aufweist.

14. Ein Heimunterhaltungssystem nach Anspruch 13, wobei die Kamera (34) einen Bewegungsmelder aufweist und wobei der Schaltmechanismus des Hubs (10) als Reaktion auf den Bewegungsmelder gesteuert werden kann, um Kamerabilder an ein ausgewähltes Fernsehgerät oder ausgewählte Fernsehgeräte zu übermitteln.

15. Ein Heimunterhaltungssystem nach einem der Ansprüche 12 bis 14, wobei das Verbrauchergerät eines oder mehrere der folgenden Geräte aufweist: einen Videorekorder (28), einen Satellitendekoder (30), einen Kabelfernsehdekoder (32), einen DVD-Player (26) und eine Spielekonsole.

16. Ein Heimunterhaltungssystem nach einem der Ansprüche 12 bis 15, wobei das oder jedes Verbrauchergerät ein Gerät zum Empfang eines Fembedienungssignals aufweist.

17. Ein Hub für ein Heimunterhaltungssystem (10), der Folgendes aufweist:
eine Vielzahl von TV-Tunern (12), die jeder ein UHF- oder UKW-Fernsehsignal empfangen und das Signal in ein Basisbandsignal demodulieren; und
eine Schaltmatrix (22) mit Basisbandeingängen für Verbrauchergeräte und für die Kanalwählersignale und Basisbandausgänge für die Buchsen des Systems, wobei die Schaltmatrix (22) ermöglicht, die Eingänge wahlweise mit den Ausgängen zu koppeln; **dadurch gekennzeichnet, dass**
der Hub für das Heimunterhaltungssystem (10) weiterhin folgendes aufweist:
einen Prozessor (23) für den Empfang von Steuersignalen aus den Buchsen, wobei die Steuersignale einer Buchse gleichzeitig zu einer Vielzahl von Eingängen weitergeleitet werden, zur Ermöglichung der Steuerung der Verbrauchergeräte und Kanalwähler (12) und für die Steuerung der Schaltmatrix zur Ermöglichung der Kopplung von ausgewählten Datensignalen von Verbrauchergeräten mit Buchsen, aus denen die Steuersignale empfangen werden.

## Revendications

1. Console de répartition (backbone) pour un système de divertissement domestique comprenant :
un multiprise relais (hub) (10) comportant une matrice de commutation (22) et une pluralité d'adaptateurs (tuner) de télévision (12) qui sont branchés sur la matrice de commutation (22) ;
une pluralité d'accès (ports) qui sont branchés sur la matrice de commutation (22) pour des appareils grand public et des récepteurs de télévision, un certain nombre de ports étant affectés à un adaptateur de télévision respectif ; et
une pluralité de capteurs de commande à distance (52) qui sont associés chacun à un port respectif pour fournir des signaux de commande à distance aux ports respectifs ;
**caractérisée en ce que** la matrice de commutation (22) permet
que les signaux de commande à distance soient fournis à l'un dudit certain nombre de ports qui doivent être acheminés au même moment à l'adaptateur de télévision (12) qui est alloué et à d'autres ports ; et
que les ports sélectionnés soient couplés ensemble pour transférer des données audio et/ou vidéo.

2. Console de répartition pour un système de divertissement domestique selon la revendication 1, dans laquelle chaque adaptateur de télévision (12) comprend un décodeur de son stéréo.

3. Console de répartition pour un système de divertissement domestique selon la revendication 1 ou 2, comprenant en outre un câblage à paires torsadées entre chaque port et le multiprise relais (10).

4. Console de répartition pour un système de divertissement domestique selon la revendication 3, dans laquelle le câblage comprend quatre paires torsadées.

5. Console de répartition pour un système de divertissement domestique selon la revendication 4, dans laquelle une paire torsadée est affectée à une signalisation de commande à distance, une paire torsadée est affectée à un canal audio, une paire torsadée est affectée à un autre canal audio et une paire torsadée est affectée à des données vidéo.

6. Console de répartition pour un système de divertissement domestique selon la revendication 4 ou 5, dans laquelle le câblage comprend un câblage équilibré à paires torsadées

7. Console de répartition pour un système de divertissement domestique selon l'une quelconque des revendications précédentes, dans laquelle chaque port comprend un port RJ45.

8. Console de répartition pour un système de divertissement domestique selon l'une quelconque des revendications précédentes, dans laquelle le multiprise relais (10) comprend un réseau de connecteurs (36), chaque connecteur du réseau (36) pouvant être connecté à un adaptateur de télévision rspectif (12) par un élément de liaison (38) et le réseau de connecteurs (36) étant connecté à la matrice de commutation (22) de telle manière que les adaptateurs de télévision (12) puissent être associés à des ports sélectionnés en utilisant les éléments de liaison (38).

9. Console de répartition pour un système de divertissement domestique selon l'une quelconque des revendications précédentes, dans laquelle on prévoit une pluralité de ports pour des entrées de signaux de caméra.

10. Console de répartition pour un système de divertissement domestique selon la revendication 9,dans laquelle le multiprise relais (10) comprend des moyens pour détecter un signal d'alarme sur les entrées de signal de caméra et dans laquelle la matrice de commutation (22) peut être commandée en réponse aux signaux d'alarme pour interrompre la transmission des signaux d'adaptateurs de télévision avec des signaux de caméra.

11. Console de répartition pour un système de divertissement domestique selon l'une quelconque des revendications précédentes, dans laquelle le multiprise relais (10) comporte une disposition de commutation pour coupler de manière sélective un premier port, sur lequel on reçoit un signal audio provenant d'un appareil grand public, avec de nombreux autres ports audio en tant que signaux de sortie audio.

12. Système de divertissement domestique comprenant une console de répartition pour un système de divertissement domestique selon l'une quelconque des revendications précédentes et une pluralité d'appareils de télévision, qui sont connectés chacun à l'un respectif des ports affectés et une pluralité d'appareils grand public qui sont connectés chacun au multiprise relais (10).

13. Système de divertissement domestique selon la revendication 12, dans lequel l'un des appareils grand public comprend une caméra (34).

14. Système de divertissement domestique selon la revendication 13, dans lequel la caméra (34) comprend un détecteur de mouvement et dans lequel la disposition de commutation du multiprise relais (10) peut être commandée en réponse au détecteur de mouvement pour fournir des images de la caméra à un ou plusieurs récepteurs de télévision.

15. Système de divertissement domestique selon l'une quelconque des revendications 12 à 14, dans lequel l'appareil grand public comprend un ou plusieurs des appareils suivants : un enregistreur vidéo (28), un décodeur de satellite (30) un décodeur de télévision par câble (32), un lecteur de DVD (26) et une console de jeu.

16. Système de divertissement domestique selon l'une quelconque des revendications 12 à 15, dans lequel l'appareil grand public ou chacun des appareils grand public comporte un dispositif pour recevoir un signal de commande à distance.

17. Multiprise relais (10) pour un système de divertissement domestique comprenant :
une pluralité d'adaptateurs de télévision (12) qui reçoivent chacun un signal de télévision UHF ou VHF et qui démodulent le signal en bande de base ; et
une matrice de commutation (22) qui comporte des entrées de bande de base pour les appareils grand public et pour les signaux des adaptateurs de télévision et des sorties de bande de base pour des prises du système, la matrice de commutation (22) permettant de coupler de manière sélective les entrées aux sorties ;
**caractérisé en ce que** le multiprise relais (10) pour un système de divertissement domestique comprend en outre :
un processeur (23) pour recevoir des signaux de commande provenant des prises, les signaux de commande provenant d'une prise étant acheminés au même moment à une pluralité d'entrées, pour permettre la commande des appareils grand public et des adaptateurs de télévision (12) et pour commander la matrice de commutation (22) pour permettre de coupler des signaux de données d'appareils grand public sélectionnés à des prises à partir desquelles on reçoit les signaux de commande.
